# EUROPÄISCHE PATENTANMELDUNG

(11) **EP 2 034 352 A2**
(43) Veröffentlichungstag der Anmeldung: **11.03.2009**
(21) Anmeldenummer: 08104800.1
(22) Anmeldetag: 18.07.2008
(51) Int. Cl.: G02B 27/00

(54) **Laserprojektionssystem mit Leistungsüberprüfung**

(30) Priorität: 07.09.2007 DE 102007042720
(71) Anmelder: Robert Bosch GmbH, 70442 Stuttgart (DE)
(72) Erfinder: Fiess, Reinhold, 77770, Durbach (DE)

(57) **Zusammenfassung**

Die vorliegende Erfindung betrifft ein insbesondere bei Anzeigevorrichtungen von Kraftfahrzeugen einsetzbares Laserprojektionssystem (1), umfassend eine Projektionsfläche (5), eine Lasereinheit (2) zur Erzeugung mindestens eines auf verschiedene Bereiche der Projektionsfläche (5) lenkbaren Laserstrahls (3), sowie eine Erfassungseinrichtung (10) zur Erfassung eines oder mehrerer Betriebsparameter des Laserprojektionssystems (1), wobei die Erfassungseinrichtung (10) mindestens einen optischen Sensor (11) sowie mindestens ein in einem Bereich der Projektionsfläche (5) und/oder in mindestens einem an die Projektionsfläche (5) angrenzenden Randbereich (12) vorgesehenes Lichtleitelement (13) umfasst, welches derart angeordnet ist, dass es Licht in den optischen Sensor (11) leitet, wenn ein Laserstrahl (3) auf das Lichtleitelement (13) auftrifft. Die Erfindung betrifft ferner ein Verfahren zur Überwachung sowie ein Verfahren zur Überprüfung eines derartigen Laserprojektionssystems.

## Beschreibung

### Stand der Technik

Die vorliegende Erfindung betrifft ein Laserprojektionssystem, das eine Projektionsfläche und eine Lasereinheit zur Erzeugung mindestens eines Laserstrahls aufweist, welcher mittels einer Ablenkeinrichtung auf verschiedene Bereiche der Projektionsfläche gelenkt werden kann. Ferner umfasst dieses System eine Erfassungseinrichtung, mit der ein oder mehrerer Betriebsparameter des Laserprojektionssystems erfasst werden können. Über die so erfassbaren Betriebsparameter kann die Funktionalität des Laserprojektionssystem überprüft bzw. überwacht werden.

Derartige Laserprojektionssysteme können vor allem für Displayanwendungen im Bereich von Kraftfahrzeugen zur Anzeige von Informationen für den Fahrer eingesetzt werden. So ist beispielsweise aus der DE 199 61 572 A1 eine als Head-Up-Display ausgeführte Anzeigevorrichtung für ein Kraftfahrzeug bekannt, bei der ein auf der Windschutzscheibe des Fahrzeugs darstellbares Bild mit Hilfe einer Lasereinheit erzeugt werden kann. Aber auch außerhalb von Fahrzeugen kann ein solches Laserprojektionssystem ganz allgemein zur Bilderzeugung oder zur Darstellung von beliebigen optischen Information sowohl innerhalb als auch außerhalb von geschlossenen Räumen zum Einsatz kommen.

Das Laserprojektionssystem kann insbesondere auf Scannerbasis ausgeführt sein und dazu eine Ablenkeinrichtung mit einem oder mehreren beweglichen Spiegeln enthalten. Bekannt sind hierbei vor allem biaxiale mikromechanische Ablenkeinheiten, mit denen ein Laserstrahl in zwei Achsen abgelenkt werden kann, um die gewünschte Darstellung auf der Projektionsfläche zu erzeugen. Die Widerholrate eines so erzeugten Bildes kann beispielsweise bei 60 Hz liegen.

Der Laserstrahl trifft auf die Projektionsfläche und wird dort gestreut oder in definierte Raumrichtungen aufgeweitet, so dass auf der Projektionsfläche ein reelles Bild entsteht. Vorzugsweise kann sich die Lasereinheit dabei auf derselben Seite der Projektionsfläche befinden wie der Betrachter und den oder die Laserstrahlen zumindest im wesentlichen aus der Blickrichtung des Betrachters auf die Projektionsfläche lenken. Alternativ kann die Projektionsfläche bei der sogenannten Rückprojektion aber auch teiltransparent ausgeführt sein, wobei die Lasereinheit vom Betrachter aus gesehen hinter der Projektionsfläche angeordnet ist und die Laserstrahlen auf die Rückseite der Projektionsfläche lenkt. Insbesondere im Bereich von Displayanwendungen kann als Projektionsfläche beispielsweise ein als Kunststoffteil ausgeführtes Mikrolinsenraster verwendet werden.

Zur Gewährleistung der Sicherheit des Laserprojektionssystems, vor allem der Sicherheit für die Augen von Betrachtern, muss insbesondere bei Freiraumprojektionen eine Fehlfunktion des Laserprojektionssystems erkannt und das System erforderlichenfalls abgeschaltet werden. Dazu ist es bekannt, Signale zu benutzen, die zur Synchronisation und Regelung des Gesamtsystems am Ablenkspiegel generiert werden, um die Spiegelbewegungen der Ablenkeinheit messen zu können. Diese Signale können beispielsweise piezoresistiv oder kapazitiv erfasst werden. Bei den bisher bekannten Systemen können diese lediglich von der Bewegung des Ablenkspiegels abhängigen Signale dann auch zur Schutzabschaltung mitverwendet werden, indem beispielsweise der Laser abgeschaltet wird, wenn erkannt wird, dass der Spiegel des Scanners sich nicht mehr bewegt, so dass die Gefahr besteht, dass der Laserstrahl kontinuierlich auf ein und dieselbe Stelle gerichtet ist.

### Offenbarung der Erfindung

Aufgabe der vorliegenden Erfindung ist es, ein verbessertes Laserprojektionssystem der eingangs genannten Art zu schaffen, das bei einfacher Konstruktion kostengünstig herstellbar ist und neben einer Sicherheitsüberwachung auch eine gezielte Erfassung von Betriebsparametern ermöglicht.

Diese Aufgabe wird durch ein Laserprojektionssystem nach Anspruch 1 gelöst.

Die der vorliegenden Erfindung zugrundeliegende Idee besteht darin, dass die Erfassungseinrichtung mindestens einen optischen Sensor sowie mindestens ein in einem Bereich der Projektionsfläche und/oder in mindestens einem an die Projektionsfläche angrenzenden Randbereich der Projektionsfläche vorgesehenes Lichtleitelement umfasst, welches derart angeordnet ist, dass es Licht in den optischen Sensor leitet, wenn ein Laserstrahl auf das Lichtleitelement auftrifft. Das Lichtleitelement führt dabei dazu, dass ein optischer Sensor mittelbar ein optisches Signal empfängt und daraus ein von einer Steuereinheit des Laserprojektionssystem weiterverarbeitbares elektrisches Signal generiert, wenn ein Laserstrahl auf eine Oberfläche des Lichtleitelements trifft.

Der optische Sensor kann beispielsweise als Lichtsensor oder Fotodiode, insbesondere als IR-Fotodiode ausgeführt sein und unter der Einwirkung von Licht seine elektrischen Eigenschaften, insbesondere seine elektrische Leitfähigkeit ändern oder einen Strom erzeugen.

Ein wesentlicher Vorteil eines erfindungsgemäßen Laserprojektionssystems besteht darin, dass nicht nur preiswerte Sensoren verwendet werden können, sondern dass selbst für eine relativ große zu überwachende Fläche wenige oder im Idealfall sogar nur ein einziger optischer Sensor ausreichen kann, wenn ein geeignetes Lichtleitelement in der in Anspruch 1 genannten Art angeordnet wird. Dabei kann diese überwachte Fläche als aktive Detektorfläche durch eine entsprechende Wahl der Größe des Lichtleitelements auch besonders leicht an den jeweiligen Anwendungsfall angepasst werden.

Weiterhin ergibt sich hier eine im Vergleich zu einer in anderen Bereichen gebräuchlichen Anordnung einer Fotodiode mit einer vorgelagerten Sammellinse deutlich einfachere Lichtsammlung, was insbesondere bei dem eingangs genannten Laserprojektionssystemen aufgrund des sich ständig ändernden Einfallwinkels des gescannten Laserstrahls einen großen Vorteil darstellt.

Insgesamt wird auf diese Weise ein Laserprojektionssystem mit einer konstruktiv besonders einfach ausgeführten Erfassungseinrichtung geschaffen, die nicht nur sehr kostengünstig hergestellt werden kann, sondern insbesondere auch eine effektive und sichere Erfassung von Betriebsparametern ermöglicht. So können beispielsweise auch Werte wie Bildhelligkeit oder Farbort besonders einfach erfasst werden, um damit die Funktionalität des Laserprojektionssystems zu überprüfen und gegebenenfalls zu korrigieren. Weiterhin ergeben sich hierdurch Vorteile bei der Montage des Laserprojektionssystems, indem die so erfassten Betriebsparameter in Verbindung mit entsprechenden Testsignalen oder Testbildern beispielsweise dazu genutzt werden können, die Projektionsfläche positionsgenau gegenüber dem Laserscanner auszurichten.

Das erfindungsgemäße Laserprojektionssystem nach Anspruch 1 weist gegenüber der vorbekannten Nutzung der am Ablenkspiegel generierten Signale außerdem den Vorteil auf, dass ein wesentlich größerer Teil der Regelungsstrecke erfasst wird. So wird hier eine einfache Anordnung zur automatischen Beeinflussung bzw. Abschaltung des Laserprojektionssystems bei Fehlfunktionen geschaffen, welche nicht nur auf den Fehler eines stehenden Ablenkspiegels beschränkt sind, sondern es können auch Fehler in der Laserleistung oder Hindernisse, beispielsweise eine im Strahlengang befindliche Person oder Hand festgestellt werden.

Ferner bietet die erfindungsgemäße Lösung den Vorteil, dass bei zumindest im wesentlichen in der Ebene der Projektionsfläche angeordneten Lichtleitelementen und optischen Sensoren eine in der Höhe sehr geringe Baugröße erzielt werden kann.

Vorteilhafte Weiterbildungen und Verbesserungen des erfindungsgemäßen Laserprojektionssystems ergeben sich aus den abhängigen Ansprüchen.

So ist es beispielsweise besonders günstig, wenn das mindestens eine Lichtelement derart ausgebildet ist, dass auf seiner Oberfläche auftreffendes Licht an mindestens einer Seitenkante austritt, wobei der mindestens eine optische Sensor derart im Bereich einer Seitenkante des Lichtleitelements angeordnet ist, dass er aus dem Lichtleitelement austretendes Licht empfangen kann. Vorzugsweise kann das Lichtleitelement dabei durch ein Kunststoffelement, insbesondere durch eine Kunststofffolie gebildet sein. Derartige lichtsammelnde und lichtleitende Kunststoffe sind an sich beispielsweise unter der Marken-Bezeichnung "LISA" der Firma Bayer bekannt und insbesondere in Dicken zwischen 1 mm und 10 mm erhältlich. Einfallende Licht mit einer beispielhaften Wellenlänge zwischen 370 nm und 700 nm regt dabei innerhalb des Kunststoffes fluoreszierende Farbstoffe an und imitiert bei Rot bzw. bei nahem Infrarot. Dieses Licht wird zu einem großen Teil unter Totalreflexion zum Rand des Kunststoffteils geleitet und tritt dort durch eine Seitenkante des Lichtleitelements aus.

Besonders vorteilhaft ist es ferner, wenn in mehreren, vorzugsweise in allen an die Projektionsfläche angrenzenden Randbereichen jeweils mindestens ein Lichtleitelement angeordnet ist. Dabei kann es sich um mehrere einzelne, voneinander getrennte Lichtleitelemente handeln oder es können auch mehrere oder alle Randbereiche von einem gemeinsamen Lichtleitelement abgedeckt sein. So können relativ leicht auch größere Randbereiche der Projektionsfläche über eine aktive Detektorfläche überwacht werden.

Eine besonders sichere Überwachung sowie eine besonders genaue Erfassung von bestimmten Betriebsparametern des Laserprojektionssystems kann dadurch erreicht werden, dass mehrere optische Sensoren an verschiedenen Randbereichen der Projektionsfläche angeordnet sind. Dabei reicht es im Falle von mehreren separaten Lichtleitelementen bereits aus, wenn an jedem einzelnen Lichtleitelement nur ein einziger optischer Sensor vorhanden ist.

Gemäß einer bevorzugten Ausführungsvariante kann auch vorgesehen sein, dass mindestens ein, vorzugsweise aber mehrere Lichtleitelemente derart innerhalb der Projektionsfläche angeordnet sind, dass sie selbst einen Teilbereich der Projektionsfläche bilden. Dabei können die über den einem Lichtleitelement zugeordneten optischen Sensor erfassten Lichtsignale mit den für diesen Bereich vorgegebenen Sollwerten verglichen werden, um mögliche Fehlfunktionen, beispielsweise einen Stillstand der Ablenkspiegel oder Hindernisse im Strahlengang zu erkennen, oder um eine Nachregelung bestimmter Betriebsparameter, beispielsweise der Bildhelligkeit ausführen zu können, sofern dies erforderlich ist.

Für eine besonders einfache und kostengünstige Montierbarkeit ist es weiterhin günstig, wenn die Projektionsfläche mit den darin und/oder daneben vorgesehenen Lichtleitelementen fest zu einer Einheit verbunden, vorzugsweise verklebt ist. Insbesondere bei Anwendungen im Kraftfahrzeugbereich stellt dies einen wesentlichen Vorteil dar.

Gemäß einer weiteren bevorzugten Ausführungsform wird vorgeschlagen, dass zwischen der Projektionsfläche und einem daneben vorgesehenen Lichtleitelement ein halb durchlässiger Spiegel mit einem dahinter befindlichen optischen Sensor angeordnet ist, wobei dieser Spiegel derart ausgerichtet ist, dass zumindest ein Anteil eines auf den Spiegel auftreffenden Laserstrahls durch den Spiegel hindurch auf den dahinter angeordneten optischen Sensor trifft, und dass zumindest ein Anteil von aus dem Lichtleitelement austretendem Licht über den Spiegel ebenfalls in den optischen Sensor umlenkbar ist. So kann der optische Sensor in vorteilhafter Weise neben der vorangehend beschriebenen Überwachungsfunktion einer dem Lichtleitelement entsprechenden größeren Fläche gleichzeitig auch als punktuelles Mess-Element bei der direkten Erfassung bestimmter Betriebsparameter des Laserprojektionssystems genutzt werden.

Die vorliegende Erfindung betrifft ferner eine Anzeigevorrichtung für ein Kraftfahrzeug, die ein Laserprojektionssystem der vorangehend beschriebenen Art umfasst. Die Anzeigevorrichtung kann dabei insbesondere als Head-Up-Display ausgebildet sein, wobei die Projektionsfläche vorzugsweise in einem in der Instrumententafel des Fahrzeugs vorgesehenen Bereich angeordnet ist, der in die Windschutzscheibe des Fahrzeuges gespiegelt werden kann.

Gegenstand der vorliegenden Erfindung ist ferner ein Verfahren zur Überwachung eines Laserprojektionssystems der vorangehend beschriebenen Art, wobei die erfassten Betriebsparameter mit vorbestimmten oder vorbestimmbaren Werten verglichen werden und das Laserprojektionssystem über eine zugehörige Steuereinheit automatisch abgeschaltet oder in seiner Leistung reduziert wird, wenn die erfassten Betriebsparameter vorbestimme Grenzwerte erreichen oder um einen Mindestwert von einem vorbestimmten Sollwert abweichen. Dies kann beispielsweise dann der Fall sein, wenn sich ein Hindernis im Strahlengang befindet und der Sollwert der Bildhelligkeit in dem betroffenen Überwachungsbereich daher nicht erreicht wird.

In ähnlicher Weise kann ein Verfahren zur Überprüfung der Funktion des Laserprojektionssystems der vorangehend beschriebenen Art eingesetzt werden, wobei die erfassten Betriebsparameter mit vorbestimmten Werten verglichen werden und über eine Steuer- oder Regelungseinheit eine automatische Korrektur vorgenommen wird, wenn die erfassten Betriebsparameter um einen Mindestwert von einem vorbestimmten Sollwert abweichen.

### Kurze Beschreibung der Zeichnungen

In den Zeichnungen sind Ausführungsbeispiele der Erfindung dargestellt, die in der nachfolgenden Beschreibung näher erläutert werden. Es zeigen:
- Figur 1:: Schematische Darstellung eines erfindungsgemäßen Laserprojektionssystems in einer Seitenansicht;
- Figur2:: Schematische Teil-Darstellung des Laserprojektionssystems aus Figur 1 in einer Draufsicht; und
- Figur 3:: Schematische Teil-Darstellung einer Ausführungsalternative.

### Ausführungsformen der Erfindung

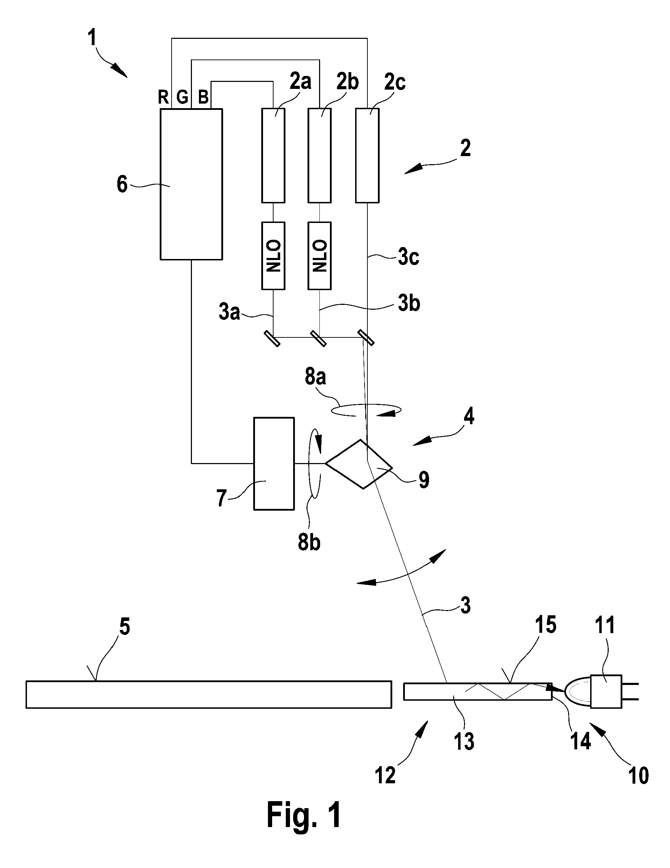

Das in den Figur 1 gezeigte Laserprojektionssystem 1 ist als Anzeigevorrichtung zum Einbau in ein nicht näher dargestelltes Kraftfahrzeug bestimmt. Es umfasst eine Lasereinheit 2 zur Erzeugung eines Laserstrahls 3, der mittels einer Ablenkeinrichtung 4 auf verschiedene Bereiche einer Projektionsfläche 5 gelenkt werden kann. Die Lasereinheit 2 besteht in dem dargestellten Ausführungsbeispiel aus drei einzelnen Laserquellen 2a, 2b und 2c, die von einer gemeinsamen Steuerungseinheit 6 gesteuert werden und die jeweils einen Laserstrahl 3a, 3b und 3c erzeugen. Diese drei in den Farben rot, grün und blau erzeugten Laserstrahlen 3a, 3b und 3c werden zu einem gemeinsamen Laserstrahl 3 zusammengefügt, welcher dann auf die Ablenkeinrichtung 4 gerichtet wird. Die Ablenkeinrichtung 4 ist als Scanner ausgeführt und umfasst einen von einer Ablenksteuereinheit 7 gesteuerten, um zwei zueinander senkrechte Achsen 8a und 8b verstellbaren Ablenkspiegel 9, über den der Laserstrahl 3 auf verschiedene Bereiche der Projektionsfläche 5 umgelenkt werden kann.

Weiterhin ist zur Leistungsüberprüfung und Überwachung des Laserprojektionssystems 1 eine Erfassungseinrichtung 10 vorgesehen, über die bestimmt Betriebsparameter erfasst werden, wodurch insbesondere Fehlfunktionen festgestellt und das Laserprojektionssystem 1 notfalls automatisch abgestellt werden kann. Diese Erfassungseinrichtung 10 umfasst gemäß der vorliegenden Erfindung in dem zeichnerisch dargestellten Ausschnitt eine Fotodiode 11 als optischen Sensor sowie ein in einem an die Projektionsfläche 5 angrenzenden Randbereich 12 vorgesehenes Lichtleitelement 13. Das Lichtleitelement 13 besteht aus einem lichtsammelnden und lichtleitenden, flachen "LISA"-Kunststoffteil, welches Licht an seiner Seitenkante 14 abgibt, wenn der Laserstrahl 3 auf seine Oberfläche 15 auftrifft. Die Fotodiode 11 ist derart vor der Seitenkante 14 des Lichtleitelements 13 angeordnet, dass sie aus der Seitenkante 14 austretendes Licht unmittelbar empfangen kann.

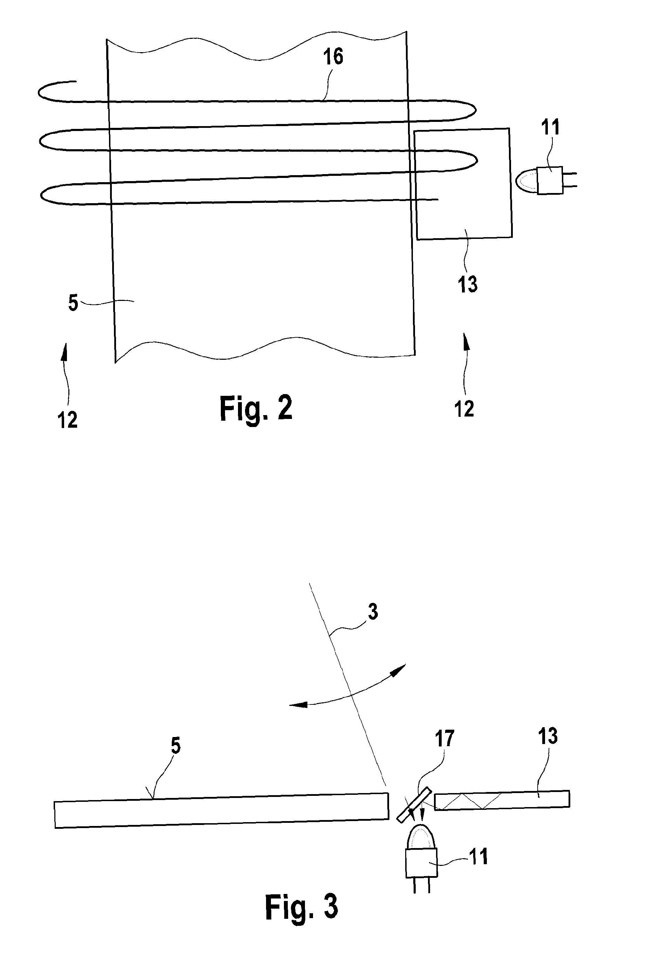

Bei dem Laserprojektionssystem 1 mit biaxialem Ablenkspiegel 9 wird nicht der gesamte mögliche Winkelbereich des Scanners zur Bilderzeugung benutzt (Figur 2). Für eine akzeptable Bilddarstellung können die beispielsweise ca. 10 % bis 20% des gesamten Winkelbereichs ausmachenden Randbereiche 12, wo der Laserstrahl 3 seine Bewegungsrichtung umkehrt, nicht genutzt werden, so dass der Laser dort abgeschaltet werden kann. Die Bahn 16 des auftreffenden Laserstrahls 3 ist in Figur 2 eingezeichnet. In diesen Randbereichen 12 können gemäß einer ersten Ausführungsform der vorliegenden Erfindung die Sensorik-Elemente der Erfassungseinrichtung 10, die Fotodiode 11 und das Lichtleitelement 13, untergebracht werden.

Bei der Bilddarstellung mittels Laserprojektion wird während der Scannbewegung des Ablenkspiegels 9 um seine zwei Achsen 8a und 8b der zusammengesetzte RGB-Laserstrahl 3 in seinen RGB-Leistungen moduliert, so dass jedes Pixel auf der Projektionsfläche 5 mit dem zugehörigen Helligkeitswert und Farbort dargestellt wird. Zu Testzwecken können dabei die drei Laserquellen 2a, 2b und 2c während der Scannbewegung auch über dem in dem Randbereich 12 befindlichen Lichtleitelement 13 eingeschaltet und nach bestimmten Testsignalvorgaben moduliert werden. Beim Einstrahlen mit Laserlicht; welches beispielsweise bei Rot 635 nm, bei Grün 530 nm und bei Blau 470 nm Wellenlänge haben kann, kommt es durch die gebündelte Einstrahlung zur einer besonders effektiven Anregung der Farbstoffe innerhalb des Lichtleitelementes 13. Die Intensität des hierbei an der Seitenkante 14 austretenden Lichts kann mit der Fotodiode 11 relativ einfach und dennoch sehr genau gemessen werden.

Ferner können hierbei ebenso wie bei einer zweiten, in den Zeichnungen nicht dargestellten Ausführungsvariante, bei der Lichtleitelemente mit zugehörigen Fotodioden bzw. anderen optische Sensoren an bestimmten Positionen der Projektionsfläche 5 selbst angeordnet sind, gezielt die Ist-Werte der Laserleistung gemessen werden und mit den Sollwerten des darzustellenden Bildinhaltes verglichen werden. Bei einer zu großen Abweichung kann so entweder eine Nachregelung erfolgen oder automatisch eine Abschaltung des Systems vorgenommen werden.

Bei der in Figur 3 dargestellten Ausführungsform ist eine Anordnung mit einem halbdurchlässigen Spiegel 17 dargestellt, der sich unter einem Winkel von 45° zwischen der Projektionsfläche 5 und einem daneben angeordneten Lichtleitelement 13 befindet. Hinter dem halbdurchlässigen Spiegel 17 ist als optischer Sensor wiederum eine Fotodiode 11 vorgesehen. Durch den halbdurchlässigen Spiegel 17 kann ein Anteil des darauf auftreffenden Laserstrahls 3 durch den Spiegel 16 hindurch auf die Fotodiode 11 treffen. Außerdem wird ein Anteil von aus dem Lichtleitelement 13 austretendem Lichts über den Spiegel 17 ebenfalls in die Fotodiode 11 gelenkt. Auf diese Weise ist es möglich, die Photodiode 11 sowohl als punktuelles Messelement als auch in Verbindung mit dem Lichtleitelement 13 gleichzeitig als flächiges Messelement zu verwenden. Dabei kann erforderlichenfalls z.B. auch punktuell ein Abgleich der Laserleistungen oder Farborte vorgenommen werden.

Bei allen dargestellten Ausführungsvarianten sind in der vorangehend beschriebenen Art auf konstruktiv besonders einfache Weise verschiedenste Funktionen des Laserprojektionssystems 1 überprüfbar, Fehlfunktionen detektierbar und Hindernisse im Strahlengang erkennbar.

## Patentansprüche

1. Laserprojektionssystem (1), umfassend eine Projektionsfläche (5), eine Lasereinheit (2) zur Erzeugung mindestens eines auf verschiedene Bereiche der Projektionsfläche (5) lenkbaren Laserstrahls (3), sowie eine Erfassungseinrichtung (10) zur Erfassung eines oder mehrerer Betriebsparameter des Laserprojektionssystems (1),
**dadurch gekennzeichnet,**
**dass** die Erfassungseinrichtung (10) mindestens einen optischen Sensor (11) sowie mindestens ein in einem Bereich der Projektionsfläche (5) und/oder in mindestens einem an die Projektionsfläche (5) angrenzenden Randbereich (12) vorgesehenes Lichtleitelement (13) umfasst, welches derart angeordnet ist, dass es Licht in den optischen Sensor (11) leitet, wenn ein Laserstrahl (3) auf das Lichtleitelement (13) auftrifft.

2. Laserprojektionssystem nach Anspruch 1, **dadurch gekennzeichnet, dass** das mindestens eine Lichtleitelement (13) derart ausgebildet ist, dass auf seine Oberfläche auftreffendes Licht an mindestens einer Seitenkante (14) austritt, wobei der mindestens eine optische Sensor (11) derart an einer Seitenkante (14) des Lichtleitelements (13) angeordnet ist, dass er aus dem Lichtleitelement (13) austretendes Licht empfängt.

3. Laserprojektionssystem nach Anspruch 2, **dadurch gekennzeichnet, dass** das Lichtleitelement (13) durch ein Kunststoffelement, insbesondere durch eine Kunststofffolie gebildet ist.

4. Laserprojektionssystem nach einem der vorherigen Ansprüche, **dadurch gekennzeichnet, dass** in mehreren, vorzugsweise in allen, an die Projektionsfläche (5) angrenzenden Randbereichen (12) jeweils mindestens ein Lichtleitelement (13) angeordnet ist.

5. Laserprojektionssystem nach einem der vorherigen Ansprüche, **dadurch gekennzeichnet, dass** mehrere optische Sensoren (11) an verschiedenen Randbereichen (12) angeordnet sind.

6. Laserprojektionssystem nach einem der vorherigen Ansprüche, **dadurch gekennzeichnet, dass** mindestens ein Lichtleitelement (13) derart innerhalb der Projektionsfläche (5) angeordnet ist, dass es selbst einen Teilbereich der Projektionsfläche (5) bildet.

7. Laserprojektionssystem nach einem der vorherigen Ansprüche, **dadurch gekennzeichnet, dass** die Projektionsfläche (5) mit dem mindestens einen Lichtleitelement (13) zu einer Einheit verbunden, insbesondere verklebt ist.

8. Laserprojektionssystem nach einem der vorherigen Ansprüche, **dadurch gekennzeichnet, dass** zwischen der Projektionsfläche (5) und einem neben der Projektionsfläche (5) befindlichen Lichtleitelement (13) ein halbdurchlässiger Spiegel (17) derart angeordnet ist, dass zumindest ein Anteil eines auf den Spiegel (17) auftreffenden Laserstrahls (3) durch den Spiegel (16) hindurch auf einen dahinter angeordneten optischen Sensor (11) trifft, und dass zumindest ein Anteil von aus dem Lichtleitelement (13) austretendem Licht über den Spiegel (17) in den optischen Sensor (11) lenkbar ist.

9. Anzeigevorrichtung für ein Kraftfahrzeug, **dadurch gekennzeichnet, dass** sie ein Laserprojektionssystem (1) nach einem der vorherigen Ansprüche umfasst.

10. Verfahren zur Überwachung eines Laserprojektionssystems (1) nach einem der Ansprüche 1 bis 8, **dadurch gekennzeichnet, dass** die erfassten Betriebsparameter mit vorbestimmten Werten verglichen werden, wobei das Laserprojektionssystem (1) über eine Steuereinheit (6, 7) automatisch abgeschaltet oder in seiner Leistung reduziert wird, wenn die erfassten Betriebsparameter vorbestimmte Grenzwerte erreichen oder um einen Mindestwert von einem vorbestimmten Sollwert abweichen.

11. Verfahren zur Überprüfung eines Laserprojektionssystems (1) nach einem der Ansprüche 1 bis 8, **dadurch gekennzeichnet, dass** die erfassten Betriebsparameter mit vorbestimmten Werten verglichen werden, wobei über eine Steuer- oder Regelungseinheit (6, 7) eine automatische Korrektur vorgenommen wird, wenn die erfassten Betriebsparameter um einen Mindestwert von einem vorbestimmten Sollwert abweichen.
